# EUROPÄISCHE PATENTSCHRIFT

(11) **EP 2 217 491 B1**
(45) Veröffentlichungstag und Bekanntmachung des Hinweises auf die Patenterteilung: **12.02.2014**
(21) Anmeldenummer: 08859283.7
(22) Anmeldetag: 08.12.2008
(51) Int. Cl.: B64C 23/06

(54) **VERWENDUNG EINER FLÜGELSPITZENVERLÄNGERUNG ZUR REDUKTION VON WIRBELSCHLEPPEN BEI FLUGZEUGEN**
USE OF A WINGTIP EXTENSION FOR REDUCTION OF VORTEX DRAG IN AIRCRAFT
USAGE D'UNE EXTENSION EN BOUT D'AILE POUR RÉDUIRE DES TRAÎNÉES TOURBILLONNAIRES D'AVIONS

(30) Priorität: 10.12.2007 DE 102007059455; 10.12.2007 US 7015 P
(43) Veröffentlichungstag der Anmeldung: 18.08.2010
(73) Patentinhaber: Airbus Operations GmbH, 21129 Hamburg (DE)
(72) Erfinder: KELM, Roland, 22761 Hamburg (DE)
(74) Vertreter: Maiwald Patentanwalts GmbH
(86) Internationale Anmeldenummer: PCT/EP2008/066997
(87) Internationale Veröffentlichungsnummer: WO 2009/074528

(56) Entgegenhaltungen:
- EP-A- 1 375 342
- FR-A- 2 772 715
- JP-A- 4 176 795
- US-A- 1 112 126
- US-A- 4 108 403
- US-A- 4 700 911
- US-A- 4 776 542
- US-A- 5 039 032
- US-A- 5 348 253
- US-A- 6 089 502
- US-A1- 2005 281 676
- US-A1- 2007 018 049

## Beschreibung

Die Erfindung bezieht sich auf eine Flügelspitzenverlängerung zum Abmindern von Wirbelschleppen eines Flugzeugs. Sie betrifft ferner auch einen Flügel eines Flugzeugs, der dazu eingerichtet ist, Wirbelschleppen des Flugzeugs abzumindern.

Bei jedem Flugzeug mit Auftrieb erzeugenden Tragflächen entstehen aufgrund physikalischer Gesetzmäßigkeiten Wirbelschleppen. Der physikalische Mechanismus zur Erzeugung von Auftrieb am Flügel besteht darin, dass im Flug die Luftströmung entlang der Flügelunterseite eine geringere Beschleunigung erfährt als entlang der Flügeloberseite. Dies führt dazu, dass der Druck auf der Unterseite relativ zur Oberseite des Flügels größer ist. Die den Flügel umströmende Luft ist aus diesem Grunde bestrebt, einen Druckausgleich zwischen der Unterseite und der Oberseite des Flügels herzustellen. Hierdurch kommt es zu einer Umströmung der Flügelspitze, bei der die Luftströmung durch das Druckgefälle um die Flügelspitze umgelenkt wird. Als Folge davon entsteht auf der Flügeloberseite eine Geschwindigkeitskomponente von der Flügelspitze weg, während die Geschwindigkeit auf der Flügelunterseite eine Komponente in Spannweitenrichtung auf die Flügelspitze zu. Diese Umströmung der Flügelspitze führt zu einer kreisförmigen Bewegung der Luft, die durch die überlagerte Anströmung einen Wirbel verursacht, der sich schleppenförmig hinter dem Flugzeug ausbreitet. Bei größeren Flugzeugen können derartige Wirbel so ausgeprägt sein, dass bei in die Wirbel hineinfliegenden kleineren Flugzeugen eine ernstzunehmende Gefahr eines Absturzes besteht. Die Wirbel haben in der Regel eine sehr hohe Stabilität und können noch Minuten nach ihrer Entstehung existieren. Die Wirbelstärke ist dabei unter anderem abhängig von der Größe und dem Gewicht des Flugzeugs und führt dazu, dass zwischen startenden und landenden Flugzeugen ein Mindestabstand ("Staffelung") vorgeschrieben ist. Je geringer die Wirbelstärke ist, desto geringer kann auch die Staffelung der Flugzeuge sein. Die Tendenz zu ansteigenden Fluggastzahlen und damit auch stetig größer werdenden Flugzeugen, welche theoretisch immer größere Wirbelschleppen erzeugen, würde zu einem vergrößerten Staffelungsabstand führen. Dieser jedoch würde durch eine in Folge sinkende Start- und Landefrequenz ein beabsichtigtes vergrößertes Passagieraufkommen konterkarieren, so dass Möglichkeiten geschaffen werden müssen, die Stärke von Wirbelschleppen zu verringern.

Im Stand der Technik sind Vorrichtungen und Systeme bekannt, die Wirbelschleppen abmindern können. Beispielsweise wird in DE 10 2005 017825 A1 beschrieben, dass ein an einem äußeren Ende eines Flügels eines Flugzeugs angebrachtes Bauteil den Aufrollvorgang der Luft im Bereich des Außenflügels durch periodische Schwenkbewegungen stört und dadurch Randwirbel und damit auch die entstehenden Wirbelschleppen reduziert. Nachteilig bei einem solchen System ist, dass es sich um ein aktives System handelt, welches relativ aufwändig, kosten- und wartungsintensiv ist und außerdem oszillierende Lasten erzeugt, die zu Ermüdungsbrüchen an der Flügelspitze führen können.

Ein weiteres System ist aus der DE 199 09 190 C2 bekannt, bei dem an jedem Flügel des Flugzeugs mindestens ein Wirbelgenerator angeordnet ist. Der Wirbelgenerator erzeugt einen Störwirbel, dessen Drehrichtung entgegengesetzt zu dem am Flügel entstehenden Randwirbel ist, welcher dadurch destabilisiert wird und sich hinter dem Flugzeug auflöst. Der Nachteil dieses Systems liegt darin, dass diese zusätzlichen Störwirbel nur bei speziellen Konstellationen der inneren und äußeren Landeklappen zuverlässig in ausreichendem Maße erzeugt werden können und außerdem einen höheren Widerstand erzeugen. Dies ist insbesondere dann der Fall, wenn eine - wie auch in der obigen Druckschrift vorgestellt - an der Flügeloberseite angeordnete Finne zum permanenten Generieren von Störwirbeln verwendet wird.

Aus US 6,089,502, US 4,776,542, US 2007/0018049 A1 und US 2005/0281676 A1 sind Flügelspitzenverlängerungen bekannt, deren Vorderkanten stärker als die Vorderkante des Flügels, an dem sie angebracht sind, gepfeilt sind, um den Strömungswiderstand des Flügels zu verringern. Aus der NASA-Publikation http://web.archive.org/web/20050124045846/http:// www.nasa.gov/centers/dryden/about/Organizations/Technology/Facts/TF-2004-15-DFRC.html ist bekannt, dass die Verringerung des Strömungswiderstands durch eine im Zirkulationsfeld der Wirbel generierte vörwärts gerichtete Kraft verursacht wird, die zur Verringerung der Stärke der Wirbel und folglich zu einem geringeren Wirbelnachlauf führt. US 1,112,126 offenbart Flügelkonstruktionen mit Flügelspitzenverlängerungen zur Verringerung der Anfälligkeit für Böen.

Die Aufgabe der vorliegenden Erfindung ist, die oben genannten Nachteile zu verringern oder gänzlich zu eliminieren. Insbesondere ist es eine Aufgabe der Erfindung, ein einfaches und im Idealfall passives System vorzuschlagen, welches einen beschleunigten Wirbelzerfall begünstigt und damit die hinter einem Flugzeug bei Start und Landung betindlichen Wirbelschleppen deutlich zu reduzieren.

Die Erfindung löst die Aufgabe durch die Verwendung einer Flügelspitzenverlängerung zum positiven Beeinflussen eines Randwirbelzerfalls durch einen aufplatzenden Wirbelkern, so dass Wirbelschleppen abgemindert werden gelöst - wie in Anspruch 1 definiert - mit einer Vorderkante und einer Hinterkante, die an einem äußeren Ende eines Flügels anbringbar ist, wobei die Vorderkante zumindest abschnittsweise im Wesentlichen gerade ist, der gerade Abschnitt der Vorderkante einen Vorderkantenpfeilungswinkel aufweist, der größer ist als der Vorderkantenpfeilungswinkel des Flügels und die lokale Tiefe der Flügelspitzenverlängerung zwischen einem Anschlussbereich zur Verbindung mit dem Flügel und dem äußeren Ende der Flügelspitzenverlängerung stetig abnimmt. Diese Flügelspitzenverlängerung bedient sich des Phänomens des Wirbelaufplatzens, welches bei Deltaflügeln auftritt. Bei Deltaflügeln ist bekannt, dass insbesondere bei hohen Anstellwinkeln die durch Deltaflügel erzeugten Randwirbel zunehmend instabil werden und "aufplatzen". Der sogenannte "Wirbelaufplatzbereich" wandert je nach Ausgestaltung des Flügels, Anstellwinkel und Geschwindigkeit von einer Position hinter dem Flügel bis in den Flügelbereich hinein und kann insbesondere durch die Pfeilung der Vorderkante des Flügels beeinflusst werden. Deltaflügel mit kleiner Vorderkantenpfeilung (zum Beispiel 45°) verschieben den Beginn des Wirbelaufplatzens zu kleineren Anstellwinkeln hin verglichen mit einer größeren Vorderkantenpfeilung (zum Beispiel 70°). Wird eine Flügelspitze derart modifiziert, dass sie eine geeignete Vorderkantenpfeilung aufweist, wird der Randwirbelzerfall positiv beeinflusst. Dabei muss die Vorderkante der Flügelspitzenverlängerung keine strikte Gerade darstellen, sondern kann auch lediglich abschnittsweise gerade sein. Dies führt zu verschiedenen alternativen Vorderkantenformen, die etwa wie bei einem Doppel-Delta-Flügel oder einem Flügel mit Strake einen Knick aufweisen oder ähnlich wie bei den Tragflächen der Concorde geschwungen sind. Die Geometrie der Flügelspitzenverlängerung an der Flügelspitze ist dabei so einzustellen, dass bei den für Start und Landung üblichen Anstellwinkeln ein Aufplatzen der Wirbel in einem Bereich zwischen der Vorderkante und der Hinterkante oder nur unwesentlich weiter stromabwärts erfolgt. Ein entstehender Flügelrandwirbel wird in Folge durch einen aufplatzenden Wirbelkern so beeinflusst, dass ausgehend davon der gesamte Randwirbel deutlich schneller zerfällt als bei einer herkömmlichen Flügelspitze.

Weitere vorteilhafte Ausführungsformen sind den Unteransprüchen zu entnehmen.

Die Erfindung wird nachfolgend anhand der Figuren näher erläutert. In den Figuren werden gleiche Objekte durch gleiche Bezugszeichen gekennzeichnet. Es zeigen:
- Fig. 1:: eine schematische Ansicht eines Flügelabschnitts mit einem ersten Ausführungsbeispiel einer Flügelspitzenverlängerung;
- Fig. 2:: schematische Ansicht eines Flügelabschnitts mit einem zweiten Ausführungsbeispiel einer Flügelspitzenverlängerung;
- Fig. 3:: eine schematische Ansicht eines Flügelabschnitts mit einem dritten Ausführungsbeispiel einer Flügelspitzenverlängerung; und
- Fig. 4:: eine schematische Ansicht einer weiteren Variation der erfindungsgemäßen Flügelspitzenverlängerung.

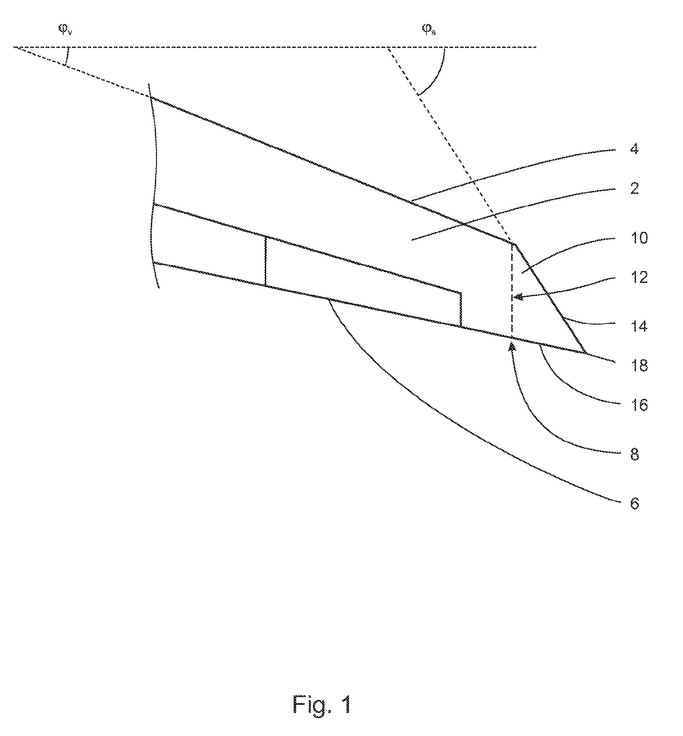

Fig. 1 zeigt den allgemeinen Aufbau der erfindungsgemäßen Flügelspitzenverlängerung. Dargestellt ist ein Flügelabschnitt 2 mit einer Vorderkante 4, einer Hinterkante 6 und einem äußeren Flügelende 8. An diesem äußeren Flügelende 8 ist die Flügelspitzenverlängerung 10 angeordnet und exemplarisch durch ein geeignetes Verbindungsverfahren - etwa Nieten, Schweißen, Kleben, Verbolzen, Laminieren etc. - mit diesem verbunden. Zu diesem Zweck weist die Flügelspitzenverlängerung 10 einen Anschlussbereich 12 auf.

Die erfindungsgemäße Flügelspitzenverlängerung 10 weist ebenfalls eine Vorderkante 14 und eine Hinterkante 16 auf. Die Vorderkante 14 ist gegenüber der Vorderkante 4 des Flügels sichtbar stärker gepfeilt, so dass an der Verbindungsstelle zwischen der Flügelspitzenverlängerung 10 und dem Flügel 2 an den Vorderkanten 4 und 14 ein deutlicher Knick entsteht. Der in Fig. 1 als ϕₛ gekennzeichnete Winkel steht für den Vorderkantenpfeilungswinkel der erfindungsgemäßen Flügelspitzenverlängerung 10. Der Vorderkantenpfeilungswinkel des Flügels 2 wird mit ϕᵥ gekennzeichnet. ϕᵥ beträgt bei üblichen Verkehrsflugzeugen, die ihre Reisefluggeschwindigkeit im transsonischen Bereich haben, im allgemeinen ungefähr 25 - 30°. Der Vorderkantenpfeilungswinkel ϕₛ der Flügelspitzenverlängerung 10 beträgt in Fig. 1 ca. 60°.

Durch die starke Pfeilung der Flügelspitzenverlängerung 10 wird bei den in Start- und Landephasen auftretenden Anstellwinkeln des Flugzeugs ein Deltaflügeln immanenter Wirbelaufplatzbereich so platziert, dass Flügelrandwirbel hinter der Tragflügelspitze im Kern aufplatzen und infolge dessen so instabil werden, dass sie sich vergleichsweise schnell auflösen und eine entsprechend deutlich schwächer ausgeprägte Wirbelschleppe verursachen.

Abhängig von der Größe, der spezifischen Aerodynamik und weiteren Randbedingungen kann der Vorderkantenpfeilungswinkel ϕₛ kleiner oder größer als in der Fig. 1 gezeigt gewählt werden. Der zu beachtende Auslegungspunkt ist dabei jeweils der einzustellende Anstellwinkel bei Start und/oder Landung, so dass der Deltaflügeleffekt bei diesem Winkel vollständig zur Geltung kommt. Denkbar sind insbesondere Winkel in einem Bereich von 40° bis 75°.

Im Ausführungsbeispiel aus Fig. 1 erstreckt sich die Hinterkante 16 der erfindungsgemäßen Flügelspitzenverlängerung 10 parallel zur Hinterkante 6 des Flügels 2. Dadurch ist die gesamte Hinterkante des Arrangements aus Flügel und Flügelspitzenverlängerung einheitlich, da keine Notwendigkeit besteht, die Hinterkante der Flügelspitzenverlängerung in Bezug auf den Deltaflügeleffekt besonders zu gestalten.

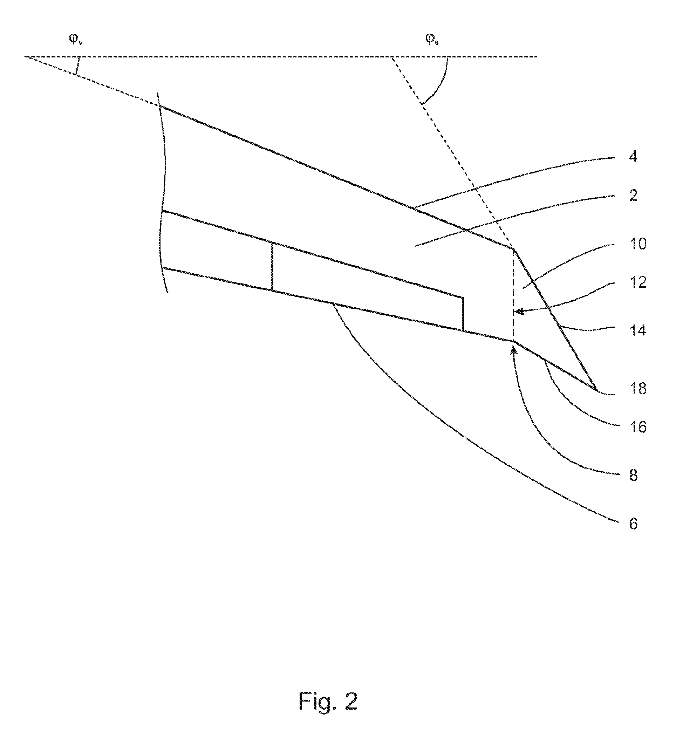

Fig. 2 zeigt dagegen ein Ausführungsbeispiel der erfindungsgemäßen Flügelspitzenverlängerung 10, bei der die Hinterkante 16 gegenüber der Hinterkante 6 des Flügels 2 stärker gepfeilt ist, so dass auch im Übergangsbereich der beiden Hinterkanten 6 und 16 ein Knick entsteht. Eine den Darstellungen aus Fig. 1 und Fig. 2 innewohnende Gemeinsamkeit ist, dass die Vorderkante 14 und die Hinterkante 16 am äußersten Ende 18 der Flügelspitzenverlängerung 10 aufeinandertreffen, so dass das äußere Ende der am Flügel 2 angebrachten Flügelspitzenverlängerung 10 eine Spitze aufweist.

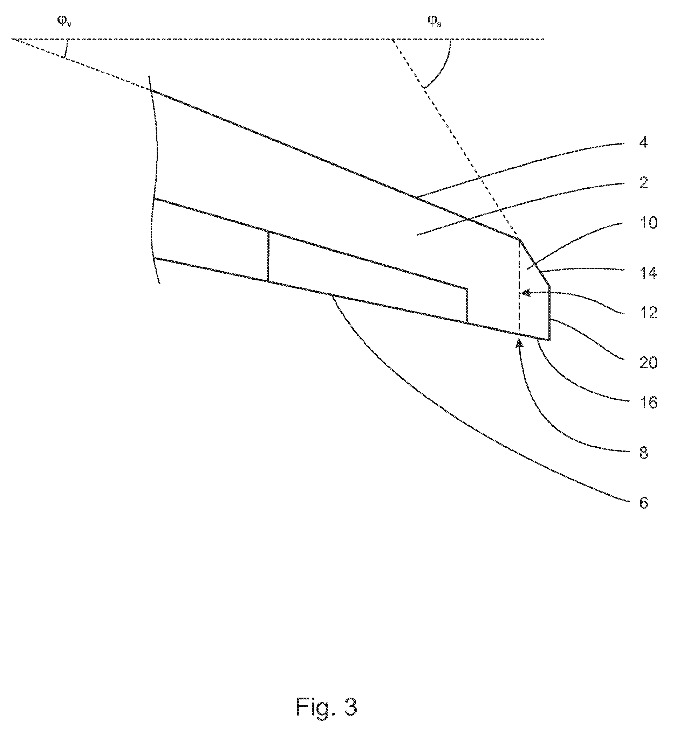

In Fig. 3 wird ein weiteres Ausführungsbeispiel der erfindungsgemäßen Flügelspitzenverlängerung 10 dargestellt, bei der das äußere Ende 18 der Flügelspitzenverlängerung 10 keine Spitze, sondern eine im Wesentlichen parallel zur Flugzeuglängsachse verlaufende Kante 20 aufweist. Die Hinterkante 16 und die Vorderkante 14 sind demnach stets voneinander beabstandet. Verliefen die Hinterkante 16 der Flügelspitzenverlängerung und die Hinterkante 6 des Flügels 2 parallel zueinander und wäre der Pfeilungswinkel ϕₛ relativ gering, würde sich die Flügelspitzenverlängerung 10 unnötig in der Querrichtung des Flugzeugs erstrecken müssen, um eine Spitze wie in den ersten beiden Ausführungsbeispielen zu bilden.

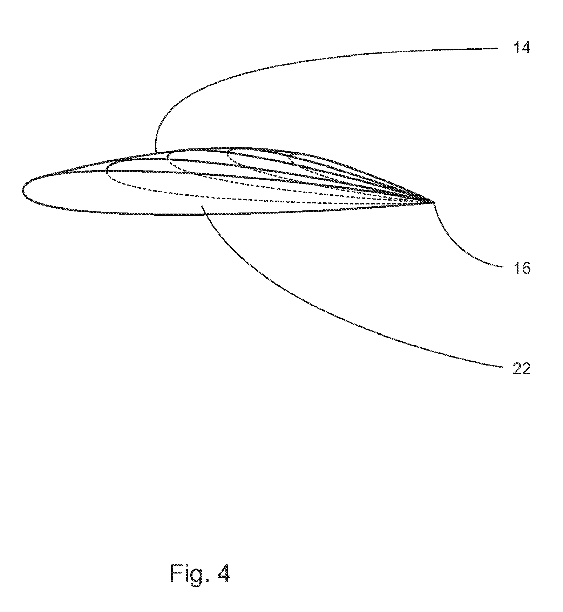

Zum Steigern des Deltaflügeleffekts kann es weiterhin vorgesehen sein, dass sich alle dargestellten Flügelspitzenverlängerungen 10 positiv verwinden. Dies bedeutet, dass der jeweilige Anstellwinkel eines lokalen Profils 22 der Flügelspitzenverlängerung 10 - wie schematisch in Fig. 4 dargestellt - zum äußeren Ende 18 hin ansteigt. Dadurch kann ein besonders harmonischer Übergang zwischen dem Flügel 2 und der Flügelspitzenverlängerung 10 hergestellt werden, wenn aerodynamische, konstruktive oder optische Gesichtsgründe einen höheren Anstellwinkel erforderlich machen. Gleichzeitig sind durch eine Verwindung tendenziell größere Pfeilungswinkel ϕₛ möglich, durch die insbesondere das Widerstandsverhalten der Flügelspitzenverlängerung 10 bei transsonischer Strömung verbessert werden kann. An dieser Stelle sei darauf hingewiesen, dass das Profil 22 der Flügelspitzenverlängerung 10 keineswegs eine herkömmliche Flügelprofilform mit abgerundeter Profilnase aufweisen muss. Für die Nutzung des Deltaflügeleffekts reicht es aus, ein flaches, brettartiges Profil zu verwenden oder die Profilnase spitz zulaufend zu gestalten, so dass zuverlässig Wirbelaufplatzbereiche entstehen.

Die dargestellten Ausführungsbeispiele der erfindungsgemäßen Flügelspitzenverlängerung 10 sind nicht als Beschränkung der Erfindung zu interpretieren. Die Erfindung wird durch den Gegenstand der Ansprüche bestimmt. Insbesondere ist die Erfindung nicht auf bestimmte Pfeilungswinkel von Flügel oder Flügelspitzenverlängerung beschränkt, sondern es sind sämtliche Pfeilungswinkel zwischen etwa 40° und 75° denkbar, die ein Fachmann unter Berücksichtigung der aerodynamischen Zusammenhänge, der Größe des Flugzeugs und der Fluggeschwindigkeiten auszuwählen vermag.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verwendung einer Flügelspitzenverlängerung (10) für einen Starrflügel (2) eines Flugzeugs zum positiven Beeinflussen eines Randwirbelzerfalls durch einen aufplatzenden Wirbelkern, so dass Wirbelschleppen abgemindert werden, die Flügelspitzenverlängerung aufweisend
- eine abschnittsweise gerade Vorderkante (14) und
- eine Hinterkante (16),
die an einem Anschlussbereich (12) eines Flügels (2) fest anbringbar ist,
wobei der gerade Abschnitt der Vorderkante (14) einen Vorderkantenpfeilungswinkel aufweist, der größer ist als der Vorderkantenpfeilungswinkel des Flügels (2),
wobei die lokale Tiefe der Flügelspitzenverlängerung (10) in dem Anschlussbereich (12) der lokalen Tiefe des Flügels (2) im Anschlussbereich (12) entspricht und
wobei die lokale Tiefe der Flügelspitzenverlängerung (10) zwischen dem Anschlussbereich (12) zur Verbindung mit dem Flügel (2) und dem entgegengesetzten Ende der Flügelspitzenverlängerung (10) stetig abnimmt.

2. Verwendung nach Anspruch 1, wobei die Hinterkante (16) der Flügelspitzenverlängerung (10) im Wesentlichen gerade ist.

3. Verwendung nach Anspruch 1 oder 2, wobei die Hinterkante (16) der Flügelspitzenverlängerung (10) sich parallel zur Hinterkante (6) des Flügels (2) erstreckt.

4. Verwendung nach einem der vorhergehenden Ansprüche, wobei die Vorderkante (14) und Hinterkante (16) der Flügelspitzenverlängerung (10) so zusammenlaufen, dass das äußere Ende der Flügelspitzenerweiterung (10) eine Spitze (18) bildet.

5. Verwendung nach einem der Ansprüche 1-3, wobei die Vorderkante (14) und Hinterkante (16) der Flügelspitzenverlängerung (10) am äußeren Ende der Flügelspitzenverlängerung (10) voneinander beabstandet sind.

6. Verwendung nach einem der vorhergehenden Ansprüche, wobei die Hinterkante (16) der Flügelspitzenverlängerung (10) einen Hinterkantenpfeilungswinkel aufweist, der größer ist als der Hinterkantenpfeilungswinkel des Flügels (2).

7. Verwendung nach einem der vorhergehenden Ansprüche, wobei die Flügelspitzenverlängerung (10) eine positive Verwindung aufweist, so dass der lokale Anstellwinkel der Flügelspitzenverlängerung (10) nach außen hin ansteigt.

8. Verwendung nach einem der vorhergehenden Ansprüche, wobei der Vorderkantenpfeilungswinkel der Flügelspitzenverlängerung (10) in einem Bereich von 40° - 75° liegt.

9. Verwendung nach einem der vorhergehenden Ansprüche, wobei der Vorderkantenpfeilungswinkel der Flügelspitzenverlängerung (10) 60° beträgt.

10. Verwendung nach einem der Ansprüche 1-8, wobei der Vorderkantenpfeilungswinkel der Flügelspitzenverlängerung (10) 70° beträgt.

11. Verwendung nach einem der vorhergehenden Ansprüche, wobei das Querschnittsprofil (22) der Flügelspitzenverlängerung (10) flach oder zumindest an der Vorderkante (14) spitz zulaufend ist.

## Claims

1. Use of a wingtip extension (10) for a fixed wing (2) of an aircraft for positively influencing a wake vortex decay through a bursting vortex core, such that wake vortices are reduced, the wingtip extension comprising
- a leading edge (14), the leading edge (14) partially being straight;
- a trailing edge (16), the trailing edge (16) being affixable to a connection region (12) of the wing (2);
wherein the straight section of the leading edge (14) comprises a leading-edge sweep angle that exceeds the leading-edge sweep angle of the wing (2);
wherein the local depth of the wingtip extension (10) corresponds to the local depth of the wing (2) in the connection region (12); and
wherein the local depth of the wingtip extension (10) gradually decreases between a connecting region (12) for connection to the wing (2) and the opposite end of the wingtip extension (10).

2. The use of claim 1, wherein the trailing edge (16) is essentially straight.

3. The use of claim 1 or 2, wherein the trailing edge (16) extends so as to be essentially parallel to the trailing edge (6) of the wing (2).

4. The use of any one of the preceding claims, whose leading edge (14) and trailing edge (16) converge in such a manner that the outer end of the wingtip extension (10) forms a point (18).

5. The use of any one of claims 1-3, whose leading edge (14) and trailing edge (16) are spaced apart from each other at the outer end of the wingtip extension (10).

6. The use of any one of the preceding claims, in which the trailing edge (16) comprises a trailing edge sweep angle that is larger than the trailing edge sweep angle of the wing (2).

7. The use of any one of the preceding claims, wherein the wingtip extension (10) comprises a positive distortion so that the local angle of attackof the wingtip extension (10) increases towards the outside.

8. The use of any one of the preceding claims, in which the leading-edge sweep angle of the wingtip extension (10) ranges from 40° to 75°.

9. The use of any one of the preceding claims, in which the leading-edge sweep angle of the wingtip extension (10) is essentially 60°.

10. The use of any one of claims 1-8, wherein the leading-edge sweep angle of the wingtip extension (10) is 70°.

11. The use of any one of the preceding claims, wherein the cross-sectional profile (22) of the wingtip extension is flat or at least at the leading edge (14) is tapered to a point.

## Revendications

1. Utilisation d'une extension en bout d'aile (10) pour une aile fixe (2) d'un avion pour influencer positivement une décomposition de tourbillons marginaux par un éclatement de noyau tourbillonnaire, de telle sorte que des traînées tourbillonnaires sont diminuées, l'extension en bout d'aile présentant
- un bord d'attaque (14) rectiligne par endroits et
- un bord de fuite (16),
qui peut être montée solidement sur une zone de jonction (12) d'une aile (2),
la section rectiligne du bord d'attaque (14) présentant un angle de flèche de bord de fuite supérieur à l'angle de flèche de bord d'attaque de l'aile (2),
la profondeur locale de l'extension en bout d'aile (10) dans la zone de jonction (12) correspondant à la profondeur locale de l'aile (2) dans la zone de jonction (12) et
la profondeur locale de l'extension en bout d'aile (10) décroissant progressivement entre la zone de jonction (12) destinée au raccordement à l'aile (2) et l'extrémité opposée de l'extension en bout d'aile (10).

2. Utilisation selon la revendication 1, le bord de fuite (16) de l'extension en bout d'aile (10) étant essentiellement rectiligne.

3. Utilisation selon la revendication 1 ou 2, le bord de fuite (16) de l'extension en bout d'aile (10) s'étendant parallèlement au bord de fuite (6) de l'aile (2).

4. Utilisation selon l'une des revendications précédentes, le bord d'attaque (14) et le bord de fuite (16) de l'extension en bout d'aile (10) se rejoignant de telle sorte que l'extrémité extérieure de l'extension en bout d'aile (10) forme une pointe (18).

5. Utilisation selon l'une des revendications 1 à 3, le bord d'attaque (14) et le bord de fuite (16) de l'extension en bout d'aile (10) étant espacés l'un de l'autre à l'extrémité extérieure de l'extension en bout d'aile (10).

6. Utilisation selon l'une des revendications précédentes, le bord de fuite (16) de l'extension en bout d'aile (10) présentant un angle de flèche de bord de fuite supérieur à l'angle de flèche de bord de fuite de l'aile (2).

7. Utilisation selon l'une des revendications précédentes, l'extension en bout d'aile (10) présentant une torsion positive, de telle sorte que l'angle d'incidence local de l'extension en bout d'aile (10) augmente vers l'extérieur.

8. Utilisation selon l'une des revendications précédentes, l'angle de flèche de bord d'attaque de l'extension en bout d'aile (10) se situant dans la plage comprise entre 40° et 75°.

9. Utilisation selon l'une des revendications précédentes, l'angle de flèche de bord d'attaque de l'extension en bout d'aile (10) étant de 60°.

10. Utilisation selon l'une des revendications 1 à 8, l'angle de flèche de bord d'attaque de l'extension en bout d'aile (10) étant de 70°.

11. Utilisation selon l'une des revendications précédentes, la section transversale (22) de l'extension en bout d'aile (10) étant plate ou convergeant en un angle aigu au moins au niveau de l'angle d'attaque (14).
